# EUROPÄISCHE PATENTSCHRIFT

(11) **EP 2 243 179 B1**
(45) Veröffentlichungstag und Bekanntmachung des Hinweises auf die Patenterteilung: **04.01.2012**
(21) Anmeldenummer: 09712006.7
(22) Anmeldetag: 19.02.2009
(51) Int. Cl.: H01M 2/20, H01M 10/04

(54) **VERFAHREN ZUR HERSTELLUNG EINER EINZELZELLE FÜR EINE BATTERIE**
METHOD FOR PRODUCING AN INDIVIDUAL CELL FOR A BATTERY
PROCÉDÉ DE FABRICATION D'UNE CELLULE INDIVIDUELLE POUR BATTERIE

(30) Priorität: 23.02.2008 DE 102008010810
(43) Veröffentlichungstag der Anmeldung: 27.10.2010
(73) Patentinhaber: Daimler AG, 70327 Stuttgart (DE)
(72) Erfinder: MEINTSCHEL, Jens, 02994 Bernsdorf (DE); SCHRÖTER, Dirk, 71364 Winnenden (DE)
(74) Vertreter: JENSEN & SON
(86) Internationale Anmeldenummer: PCT/EP2009/001171
(87) Internationale Veröffentlichungsnummer: WO 2009/103519

(56) Entgegenhaltungen:
- EP-A- 1 424 744
- US-A- 5 567 544
- US-A1- 2007 042 264

## Beschreibung

Die Erfindung betrifft ein Verfahren zur Herstellung einer Einzelzelle für eine Batterie gemäß dem Oberbegriff des Anspruchs 1.

Nach dem Stand der Technik sind Hochvolt-Batterien, z. B. Lithium-Ionen-Batterien, für Fahrzeuganwendungen bekannt, die insbesondere aus mehreren elektrisch in Reihe und/oder parallel verschalteten Einzelzellen aufgebaut sind. Dabei können bei bipolaren Einzelzellen die elektrischen Kontakte, d. h. ein Plus- und ein Minuspol, direkt auf gegeneinander elektrisch isolierte Teile des Gehäuses gelegt sein.

Aus der P810600 (Amtl. Az. 10 2007 063 181.4) ist eine Einzelzelle, insbesondere eine Flachzelle, für eine Batterie mit einem innerhalb eines Zellengehäuses angeordneten Elektrodenstapel bekannt. Das Zellengehäuse weist zwei sich gegenüberliegende Gehäuseseitenwände sowie zwischen diesen angeordneten, elektrisch isolierenden Rahmen auf. Die elektrische Kontaktierung des Elektrodenstapels erfolgt direkt zu den gegenüberliegen Gehäuseseitenwänden, insbesondere Flachseiten, des Zellengehäuses. Dabei geschieht die Kontaktierung in einem Verfahren zur Herstellung der Einzelzelle insbesondere mittels Durchschweißen einer zugehören Außenseite in einem montierten Zustand der Einzelzelle, um die im Inneren liegenden Polkontakte der Elektrodenfolien nach außen zu kontaktieren.

Nachteilig ist jedoch, dass während des Schweißvorganges ein Wärmeeintrag in das Innere des Zellengehäuses stattfindet, der eine Beschädigung oder Zerstörung der in dem Zellengehäuse angeordneten Bauteile, wie beispielsweise dem Elektrodenstapel, hervorrufen kann. Deshalb sind Maßnahmen zu einem Schutz temperaturempfindlicher Teile nötig, welche zu einem erhöhten Material-, Zeit- und daraus folgend zu einem erhöhten Kostenaufwand führen.

Weiterhin sind aus der DE 101 05 877 A1 eine Lithium-Ion-Batterie und ein Verfahren zu deren Herstellung bekannt. Die Lithium-Ion-Batterie umfasst ein Gehäuse mit einer Vorderseite, einer Rückseite, einer Anodenzellenklemme und einer von dieser getrennten Kathodenzellenklemme. In dem Gehäuse sind mehrere bipolare Lithium-Ion-Zellen mit einem für Lithium-Ionen permeablen Polymerseparator angeordnet, wobei die Zellenelektroden aus einem Dünnfilm-Kunststoffsubstrat bestehen und mit den Anoden- und Kathodenklemmen geeignet elektrisch verbunden sind. Die Zellen sind in Längsrichtung in dem Gehäuse parallel zu den Seiten des Gehäuses angeordnet, wobei das Gehäuse durch die Kathodenzellenklemme an einem Ende und durch die Anodenzellenklemme am entgegengesetzten Ende der Zellenhülse verschlossen ist. In das verschlossene Gehäuse ist ein zwischen den Zellen angeordneter Elektrolyt einfüllbar, wobei der Elektrolyt zu einem Transport von Ionen zwischen der Anode und der Kathode vorgesehen ist.

Der Erfindung liegt daher die Aufgabe zugrunde, ein verbessertes Verfahren zur Herstellung einer Einzelzelle bereitzustellen.

Die Aufgabe wird erfindungsgemäß mit einem Verfahren gelöst, welches die im Anspruch 1 angegebenen Merkmale aufweist. Vorteilhafte Ausgestaltungen der Erfindung sind Gegenstand der Unteransprüche.

Bei dem erfindungsgemäßen Verfahren zur Herstellung einer Einzelzelle für eine Batterie mit einem innerhalb eines Zellengehäuses angeordneten Elektrodenstapel wird das Zellengehäuse aus zwei elektrisch leitenden Gehäuseseitenwänden und einem dazwischen angeordneten, randseitig umlaufenden sowie elektrisch isolierenden Rahmen gebildet. Dabei werden Stromableiterfahnen einer Polarität jeweils zu einem Polkontakt des Elektrodenstapels zusammengefasst, in den Rahmen zwei elektrisch voneinander isolierte und voneinander beabstandete Materialrücknahmen eingebracht, in welche Stromableiterfahnen gleicher Polarität eingelegt werden und zwischen den Polkontakten und den Gehäuseseitenwänden wird eine elektrisch leitfähige Verbindung erzeugt. Erfindungsgemäß wird die elektrisch leitfähige Verbindung in einem geöffneten Zustand der Einzelzelle erzeugt.

Unter dem geöffneten Zustand wird insbesondere verstanden, dass die Gehäuseseitenwände nicht an dem Rahmen befestigt sind, wobei der Elektrodenstapel in dem Rahmen angeordnet sein kann.

Durch die Anordnung des Elektrodenstapels in dem randseitig umlaufenden, insbesondere elektrisch isolierenden Rahmen, kann in vorteilhafter Weise eine zusätzliche isolierende Anordnung eingespart werden. Weiterhin ist die Handhabbarkeit der Einzelzelle erleichtert bzw. sicherer gestaltet. Durch die erfindungsgemäße elektrisch leitfähige Verbindung der Polkontakte mit den Gehäuseseitenwänden im geöffneten Zustand der Einzelzelle besteht die Möglichkeit einer nachträglichen der Kontrolle der Fügestelle. Weiterhin können durch die vorgeschlagene Kontaktierung die Polkontakte des Elektrodenstapels ohne aufwändige Abdichtungsmaßnahmen vom Inneren der Einzelzelle nach außen geführt werden.

In einer Weiterbildung der Erfindung wird vor einer Anordnung des Elektrodenstapels in dem Rahmen ein Polkontakt mit einer Gehäuseseitenwand elektrisch leitfähig verbunden, was zu einem geringeren technischen Aufwand führt, da nur der verbleibende Polkontakt nach der Anordnung des Elektrodenstapels in dem Rahmen elektrisch mit der zugehörigen Gehäuseseitenwand verbunden werden muss.

Nach der Anordnung des Elektrodenstapels in dem Rahmen wird zumindest der verbleibende Polkontakt mit der zugehörigen Gehäuseseitenwand elektrisch leitfähig verbunden. Alternativ können auch beide Polkontakte nach der Anordnung des Elektrodenstapels elektrisch leitfähig mit den Gehäuseseitenwänden verbunden werden.

Die Erzeugung der elektrisch leitfähigen Verbindung der Polkontakte mit den Gehäuseseiten sowohl vor einer Anordnung als auch nach einer Anordnung des Elektrodenstapels in dem Rahmen kann zum einen insbesondere in einem Schweißverfahren erfolgen, wobei während des Schweißverfahrens eine oder mehrere Schweißnähte und/oder Schweißpunkte erzeugt werden. In bevorzugter Weise wird bei dem Schweißverfahren die Gehäuseseitenwand weiter in der Tiefe die den Polkontakt bildenden Stromableiterfahnen des Elektrodenstapels partiell aufgeschmolzen, so dass mit einer Schweißnaht und/oder einem Schweißpunkt alle die Polkontakte bildenden Stromableiterfahnen sowie die entsprechende elektrisch leitende Gehäuseseitenwand insbesondere in einem Schritt miteinander verschweißt werden. Durch die entstehende stoffschlüssige Verbindung wird eine elektrisch leitfähige Verbindung mit einem geringen Übergangswiderstand erzeugt, die eine hohe Strombelastbarkeit aufweist.

Zum anderen kann die elektrisch leitfähige Verbindung der Gehäuseseitenwände und der Polkontakte in einem kombinierten Schweiß-Press-Fügeverfahren, z. B. einem Ultraschall-Schweißverfahren erzeugt werden. Dadurch wird zusätzlich zu den Vorteilen des Schweißprozesses einerseits durch die Verpressung ein sicherer Fügeprozess erzielt und andererseits durch das Ultraschall-Schweißverfahren ein Wärmeeintrag in den Elektrodenstapel vermieden oder zumindest vermindert.

In einer vorteilhaften Weiterführung der Erfindung wird vor der Erzeugung der elektrisch leitfähigen Verbindung zwischen die Polkontakte und die Gehäuseseitenwände eine separate Folie aus einem Zusatzmaterial eingebracht oder auf die den Polkontakten zugewandten Seiten der Gehäuseseitenwände aufgebracht, so dass die Anbindung der Polkontakte an die Gehäuseseitenwände verbessert wird.

Der Elektrodenstapel wird dabei aus einzelnen Elektroden, vorzugsweise Elektrodenfolien, gebildet, wobei die Elektroden durch einen Separator, vorzugsweise eine Separatorfolie, voneinander isolierend getrennt werden. Dabei werden als durch einen Separator, vorzugsweise eine Separatorfolie, voneinander isolierend getrennt werden. Dabei werden als Elektrodenfolie eine Kupfer- und/oder eine Aluminiumfolie oder eine Folie aus einer derartigen Legierung gewählt.

In besonderer Weise wird als Stromableiterfahne ein nach außerhalb des Elektrodenstapels geführter Randbereich der jeweiligen Elektrodenfolie verwendet, wodurch eine aufwändige Kontaktierung von Elektrodenfolie und Stromableiterfahne entfällt. Gleichzeitig ist diese Art der Kontaktierung sehr sicher gegen zumindest viele, insbesondere äußere Einflüsse wie Stöße oder Vibrationen.

Gemäß einer sinnvollen Weiterbildung der Erfindung werden die in Richtung der Stapelung der Elektroden gemessene lichte Höhe einer Materialrücknahme kleiner oder gleich der entsprechenden Erstreckung der unbeeinflusst übereinander gestapelten zugehörigen Stromableiterfahnen und deren parallel zur Flachseite einer Elektrodenfolie gemessene Tiefe größer oder gleich der entsprechenden Erstreckung der zugehörigen Stromableiterfahnen gewählt. Hierdurch werden die Stromableiterfahnen sicher in den Materialrücknahmen gehaltert.

Zur Sicherstellung der mechanischen Stabilität und einer Dichtigkeit der Einzelzelle gegenüber einem Durchtritt von Fremdstoffen in das Zellengehäuse oder von Stoffen aus dem Zellengehäuse werden in einer Ausgestaltung der Erfindung die Gehäuseseitenwände nach der Erzeugung der elektrisch leitfähigen Verbindung kraftschlüssig, stoffschlüssig anschließend die Einzelzelle mit einem Elektrolyt befüllt werden kann.

Durch eine oder mehrere der genannten Maßnahmen ist es möglich, bei einer preiswerten Herstellung den Aufbau eines Zellengehäuses zu vereinfachen, die Vibrationssicherheit und damit die Stabilität, die Lebensdauer sowie dadurch wiederum auch die Verwendungsvielfalt zu erhöhen. Des Weiteren ist durch die einfache Kontaktierung an der geöffneten Einzelzelle eine Kontrolle der Fügestelle möglich, so dass insbesondere auch der Ausschuss während der Herstellung verringert wird. Ferner wird durch die stoffschlüssige Kontaktierung der Stromableiterfahnen zur Bildung der Polkontakte und der stoffschlüssigen Verbindung dieser mit den Gehäuseseitenwänden die Stromtragfähigkeit verbessert. Auch liegt keine Schwächung der Druckdichtigkeit des Zellengehäuses der Einzelzelle vor, da keine Kontaktdurchführung der Polkontakte erfolgt.

Vorteilhafte Ausgestaltungen der Erfindung werden im Folgenden anhand von Zeichnungen näher erläutert.

Dabei zeigen:
- Fig. 1: schematisch eine Einzelzelle in einem geöffneten Zustand,
- Fig. 2: schematisch ein Vorrichtung zur Durchführung eines Schweiß-Press-Fügeverfahrens,
- Fig. 3: schematisch eine erste perspektivische Ansicht der geöffneten Einzelzelle gemäß Figur 1 und eine Anordnung der Vorrichtung zur Durchführung des Schweiß-Press-Fügeverfahrens während eines Schweißvorganges,
- Fig. 4: schematisch eine zweite perspektivische Ansicht der geöffneten Einzelzelle gemäß Figur 1 und eine Anordnung der Vorrichtung zur Durchführung des Schweiß-Press-Fügeverfahrens während eines Schweißvorganges,
- Fig. 5: schematisch eine perspektivische Ansicht eines Elektrodenstapels während eines Schweißvorganges zur Erzeugung einer elektrisch leitfähigen Verbindung mit einer Gehäuseseitenwand mittels einer Vorrichtung zur Durchführung eines Schweiß-Press-Fügeverfahrens, und
- Fig. 6: schematisch eine Vergrößerung eines Ausschnittes von Figur 5.

Einander entsprechende Teile sind in allen Figuren mit den gleichen Bezugszeichen versehen.

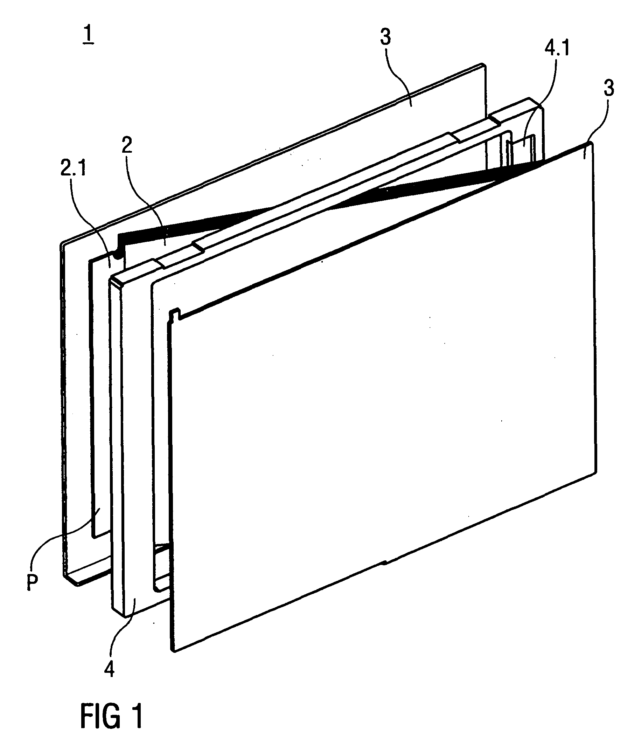

Figur 1 stellt eine als Rahmenflachzelle ausgeführte Einzelzelle 1 in einem geöffneten Zustand dar.

Die Einzelzelle 1 umfasst einen in einem Zellengehäuse angeordneten Elektrodenstapel 2, wobei das Zellengehäuse zwei elektrisch leitende Gehäuseseitenwände 3, insbesondere Flachseiten, und einen dazwischen angeordneten, randseitig umlaufenden sowie elektrisch isolierenden Rahmen 4 aufweist.

Der Elektrodenstapel 2 ist dabei insbesondere aus nicht näher dargestellten Elektrodenfolien gebildet, wobei in einem mittleren Bereich des Elektrodenstapels 2 Elektrodenfolien unterschiedlicher Polarität, insbesondere Aluminium- und/oder Kupferfolien und/oder Folien aus einer Metalllegierung, übereinander gestapelt und mittels eines nicht näher dargestellten Separators, insbesondere einer Separatorfolie, elektrisch voneinander isoliert sind.

In einem über den mittleren Bereich des Elektrodenstapels 2 überstehenden Randbereich der Elektrodenfolien, den Stromableiterfahnen 2.1, sind Elektrodenfolien gleicher Polarität elektrisch miteinander verbunden und bilden die Polkontakte P des Elektrodenstapels 2.

Der den Elektrodenstapel 2 randseitig umlaufende Rahmen 4 weist zwei voneinander beabstandete, sich gegenüberliegende Materialrücknahmen 4.1 auf, die dabei so ausgebildet sind, dass die aus den Stromableiterfahnen 2.1 gebildeten Polkontakte P in den Materialrücknahmen 4.1 anordbar sind. Die lichte Höhe der Materialrücknahmen 4.1 ist insbesondere so ausgebildet, dass sie der entsprechenden Erstreckung der unbeeinflusst übereinander gestapelten Stromableiterfahnen 2.1 entspricht oder geringer als diese ist. Die Tiefe der Materialrücknahmen 4.1 entspricht der entsprechenden Erstreckung der Stromableiterfahnen 2.1 oder ist größer ausgebildet als diese.

Durch die elektrisch isolierende Ausführung des Rahmens 4 sind die aus den Stromableiterfahnen 2.1 gebildeten Polkontakte P unterschiedlicher Polarität elektrisch voneinander isoliert, so dass in vorteilhafter Weise auf zusätzliche Anordnungen zu einer elektrischen Isolation verzichtet werden kann.

Erfindungsgemäß wird eine elektrisch leitfähige Verbindung der Polkontakte P und der Gehäuseseitenwände 3 in dem dargestellten geöffneten Zustand der Einzelzelle 1 erzeugt. Dabei stellt der dargstellte geöffnete Zustand insbesondere einen Zustand dar, in welchem die Gehäuseseitenwände 3 nicht an dem Rahmen 4 befestigt und der Elektrodenstapel 2 ist durch den Rahmen 4 geführt bzw. in diesem angeordnet.

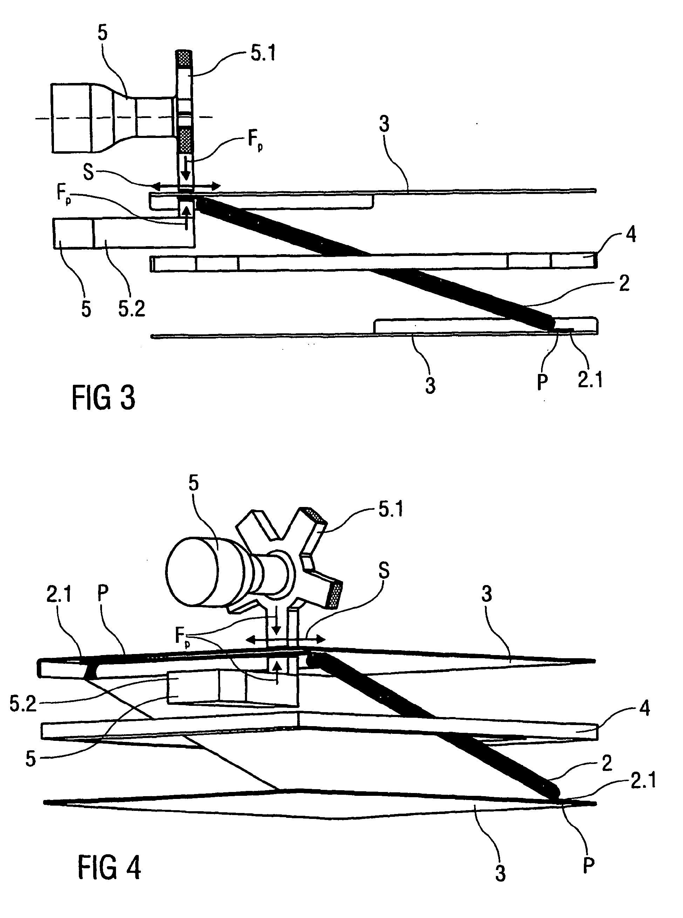

Zur Erzeugung dieser elektrisch leitfähigen Verbindung werden insbesondere die in den Figuren 3 bis 6 näher erläuterten Schweißverfahren und/oder Schweiß-Press-Fügeverfahren verwendet.

Eine stoff-, form- und/oder kraftschlüssige Befestigung der Gehäuseseitenwände 3 an dem Rahmen 4 erfolgt in nicht näher dargestellter Weise nach der Erzeugung der elektrisch leitfähigen Verbindung, z. B. mittels Kleben und/oder Verbindungselementen, um eine hohe Stabilität der Verbindung zwischen den Gehäuseseitenwänden 3 und dem Rahmen 4 zu erreichen.

Bei den Verbindungselementen handelt es sich insbesondere um Nieten, den Rahmen zumindest randseitig umgreifende fahnenartige Verlängerungen der Gehäuseseitenwände 3 und/oder an dem Rahmen angeformte Halteelemente. Zur Erzeugung der form- und/oder kraftschlüssigen Verbindung weisen die Gehäuseseitenwände 3 und/oder der Rahmen 4 vorzugsweise nicht näher dargestellte, zu den jeweiligen Verbindungselementen korrespondierende Formen oder Aussparungen auf.

Aus der stoff-, form- und/oder kraftschlüssigen Befestigung der Gehäuseseitenwände 3 an dem Rahmen 4 resultiert neben der hohen Stabilität eine dichte Ausführung des Zellengehäuses, so dass keine Fremdstoffe in dieses eindringen können. Weiterhin ist sichergestellt, dass ein nach der Befestigung der Gehäuseseitenwände 3 an dem Rahmen 4 eingefülltes Elektrolyt nicht austreten kann und ein Umfeld der aus den Einzelzellen 1 gebildeten, nicht näher dargestellten Batterie schädigt.

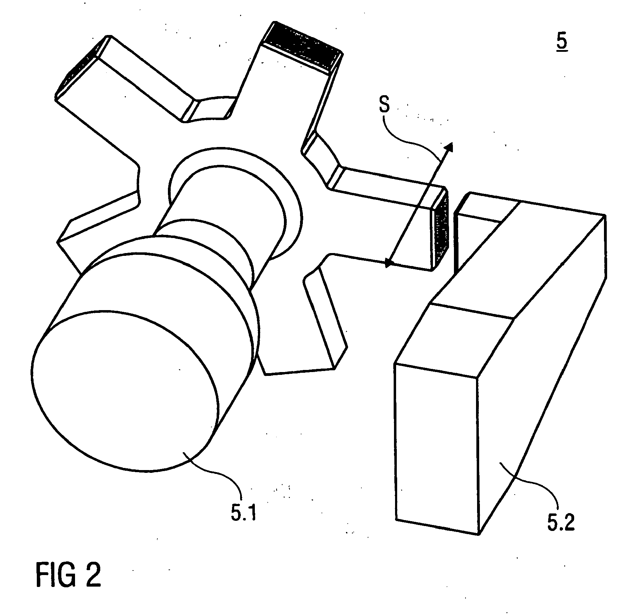

Figur 2 zeigt eine Schweißvorrichtung 5 zur Durchführung eines Schweiß-Press-Fügeverfahrens. Bei dieser Schweißvorrichtung 5 handelt es sich insbesondere um eine Ultraschall-Schweißvorrichtung, die aus einer Sonotrode 5.1 und einem Amboss 5.2 gebildet ist.

Zur elektrisch leitfähigen Verbindung der Polkontakte P mit den Gehäuseseitenwänden 3 wird der Elektrodenstapel 2 gemäß den Figuren 3 und 4 durch den Rahmen 3 geführt und die Stromableiterfahnen 2.1, welche die Polkontakte P bilden, liegen übereinander gestapelt und plan auf den Innenseiten der jeweils zugehörigen Zellseitenwand 3 auf. Eine dabei notwendig relative Biegung der Stromableiterfahnen 2.1 zu dem mittleren Bereich des Elektrodenstapels 2 wird durch die Flexibilität der verwendeten Elektrodenfolien erreicht.

Zu einem Verschweißen der Stromableiterfahnen 2.1 zu den Polkontakten P und zu einem gleichzeitigen Verschweißen dieser mit den Gehäuseseitenwänden 3 werden die auf den Innenseiten der Gehäuseseitenwände 3 aufliegenden Polkontakte P und die Gehäuseseitenwände 3 zwischen der Sonotrode 5.1 und dem Amboss 5.2 angeordnet und durch eine eingeführte Presskraft F_{P} verpresst. Gleichzeitig erzeugt die Sonotrode 5.1 eine Schwingung S mit einer Frequenz im Ultraschallbereich, so dass die Polkontakte P und die Gehäuseseitenwände 3 unter großer Reibung gegeneinander bewegt werden. Durch eine dabei entstehende große Reibungshitze entsteht eine nicht näher dargestellte Schweißnaht oder ein nicht näher dargestellter Schweißpunkt, so dass eine stoffschlüssige und elektrisch leitfähige Verbindung zwischen den Polkontakten P und den Gehäuseseitenwänden 3 entsteht.

Eine flächige elektrisch leitfähige Verbindung der Gehäuseseitenwände 3 mit den Polkontakten P wird insbesondere durch mehrere in Reihe und/oder parallel angeordnete Schweißnähte und/oder Schweißpunkte erzielt.

Neben dem Ultraschall-Schweißverfahren eignen sich zur Erzeugung alternativ weitere nicht näher dargestellte, im Stand der Technik bekannte Schweiß-Press-Fügeverfahren. Dabei kann es sich beispielsweise um ein Kondensatorentladungs-Schweißen, ein Widerstands-Press-Schweißen, ein elektrisches Punktschweißen oder ein elektrisches Rollnahtschweißen handeln.

Gemäß einer nicht näher dargestellten Weiterführung der Erfindung werden die Stromableiterfahnen 2.1 in einem gesonderten Verfahren vor der Erzeugung der elektrische leitfähigen Verbindung mit den Gehäuseseitenwänden 3 zu den Polkontakten P verpresst und/oder verschweißt.

In einer weiteren nicht näher dargstellten Ausgestaltung der Erfindung kann zwischen den Polkontakten P, welche z. B. aus Kupfer gefertigt sind, und den Gehäuseseitenwänden 3, welche z. B. aus Aluminium gefertigt sind, zusätzlich eine nicht näher dargestellte separate Folie, welche z. B. aus Nickel gefertigt ist, eingebracht werden, um eine verbesserte Anbindung zwischen den Polkontakten P und den Gehäuseseitenwänden 3 während des Schweißvorganges zu erreichen. Diese Folie kann alternativ ebenfalls auf die den Polkontakten P zugewandten Seiten der Gehäuseseitenwände 3 aufgebracht sein.

In vorteilhafter Weiterbildung der Erfindung ist es weiterhin möglich, eine nicht näher dargestellte elektrisch isolierende Folie zwischen den Polkontakten P und den Gehäuseseitenwänden 3 anzuordnen bzw. die Gehäuseseitenwände 3 einseitig mit einer elektrischen isolierenden Schicht auszuführen, so dass eine elektrische Kontaktierung der Polkontakte P mit den Gehäuseseitenwänden 3 erst bei dem Schweißvorgang entsteht. Diese isolierende Folie bzw. Schicht dient vorzugsweise weiterhin zum Schutz der Gehäuseseitenwände 3 vor Korrosion, beispielsweise hervorgerufen durch einen Kontakt mit dem in der Einzelzelle 1 befindlichen Elektrolyt.

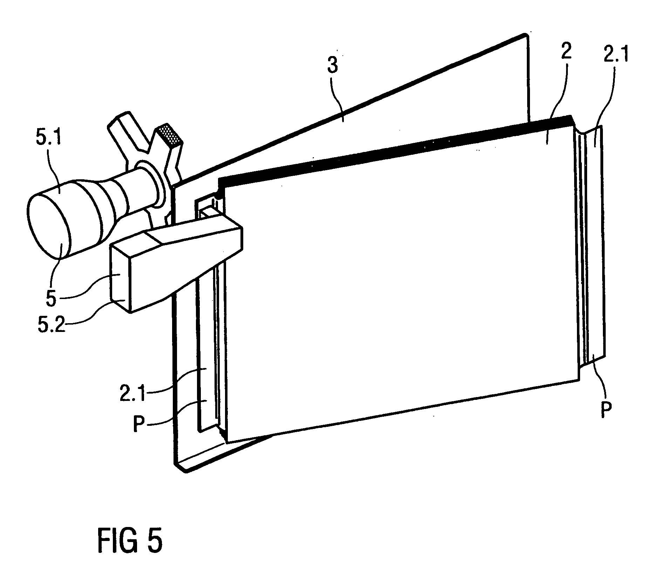

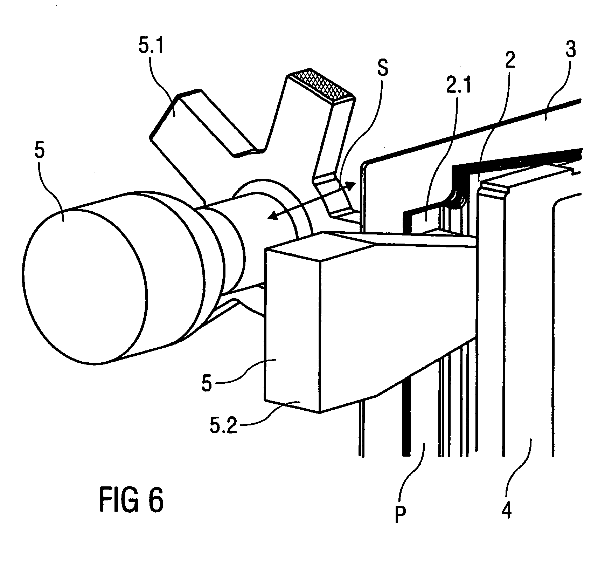

In den Figuren 5 und 6 ist anhand einer perspektivische Ansicht des Elektrodenstapels 2 während eines Schweißvorganges zur elektrisch leitfähigen Verbindung mit einer Gehäuseseitenwand 3 mittels der Schweißvorrichtung 5 zur Durchführung des Schweiß-Press-Fügeverfahrens eine vorteilhafte Ausgestaltung der Erfindung dargestellt.

Dabei wird in einem geöffneten Zustand der Einzelzelle 1, in welchem der Elektrodenstapel 2 noch nicht durch den Rahmen 4 geführt bzw. in diesem angeordnet ist, ein durch die Stromableiterfahnen 2.1 gebildeter Polkontakt P des Elektrodenstapels 2 mit einer zugehörigen Zellseitenwand 3 elektrisch leitfähig verbunden, so dass nach einer Durchführung des Elektrodenstapels 2 durch dem Rahmen 4 lediglich der verbleibende Polkontakt P mit der anderen Zellseitenwand 3 elektrisch leitfähig verbunden werden muss. Insbesondere durch die daraus resultierende vereinfachte Handhabung des Elektrodenstapels wird eine Vereinfachung der Herstellung der Einzelzelle 1 erreicht.

Zur Erzeugung der elektrisch leitfähigen Verbindung können wiederum neben dem dargestellten Ultraschall-Schweißverfahren die weiterhin aus dem Stand der Technik bekannten Schweiß-Press-Fügeverfahren verwendet werden. Auch können Schweißverfahren mit hohem Wärmeeintrag, wie beispielsweise ein Laserschweißverfahren, verwendet werden, da bei der dargestellten Anordnung eine gute Wärmeabfuhr gewährleistet ist und anhand von einfachen, nicht näher dargestellten Maßnahmen zusätzlich vergrößert werden kann.

### Bezugszeichenliste

- 1: Einzelzelle
- 2: Elektrodenstapel
2.1 Stromableiterfahne
- 3: Gehäuseseitenwand
- 4: Rahmen
4.1 Materialrücknahme
- 5: Schweißvorrichtung
5.1 Sonotrode
5.2 Amboss

- F_{P}: Presskraft
- P: Polkontakt
- S: Schwingung

## Patentansprüche

1. Verfahren zur Herstellung einer Einzelzelle (1) für eine Batterie mit einem innerhalb eines Zellengehäuses angeordneten Elektrodenstapel (2), wobei das Zellengehäuse aus zwei elektrisch leitenden Gehäuseseitenwänden (3) und einem dazwischen angeordneten, randseitig umlaufenden sowie elektrisch isolierenden Rahmen (4) gebildet wird, wobei Stromableiterfahnen (2.1) einer Polarität jeweils zu einem Polkontakt (P) des Elektrodenstapels (2) zusammengefasst werden, in den Rahmen (4) zwei elektrisch voneinander isolierte und voneinander beabstandete Materialrücknahmen (4.1) eingebracht werden, in welche Stromableiterfahnen (2.1) gleicher Polarität eingelegt werden und zwischen den Polkontakten (P) und den Gehäuseseitenwänden (3) eine elektrisch leitfähige Verbindung erzeugt wird,
**dadurch gekennzeichnet, dass**
die elektrisch leitfähige Verbindung in einem geöffneten Zustand der Einzelzelle (1) erzeugt wird.

2. Verfahren nach Anspruch 1,
**dadurch gekennzeichnet, dass**
vor einer Anordnung des Elektrodenstapels (2) in dem Rahmen (4) ein Polkontakt (P) mit einer Gehäuseseitenwand (3) elektrisch leitfähig verbunden wird.

3. Verfahren nach Anspruch 1,
**dadurch gekennzeichnet, dass**
nach der Anordnung des Elektrodenstapels (2) in dem Rahmen (4) zumindest ein Polkontakt (P) mit einer Gehäuseseitenwand (3) elektrisch leitfähig verbunden wird.

4. Verfahren nach Anspruch 1,
**dadurch gekennzeichnet, dass**
die elektrisch leitfähige Verbindung der Gehäuseseitenwände (3) und der Polkontakte (P) in einem Schweißverfahren und/oder in einem kombinierten Schweiß-Press-Fügeverfahren erzeugt wird.

5. Verfahren nach Anspruch 4,
**dadurch gekennzeichnet, dass**
während des Schweißverfahrens eine oder mehrere Schweißnähte und/oder Schweißpunkte erzeugt werden.

6. Verfahren nach Anspruch 4,
**dadurch gekennzeichnet, dass**
während des Schweiß-Press-Fügeverfahrens eine oder mehrere Schweißnähte und/oder Schweißpunkte erzeugt werden und die Polkontakte (P) und die Gehäuseseitenwände (3) verpresst werden.

7. Verfahren nach Anspruch 5,
**dadurch gekennzeichnet, dass**
mit einer Schweißnaht und/oder einem Schweißpunkt alle die Polkontakte (P) bildenden Stromableiterfahnen (2.1) sowie die entsprechende elektrisch leitende Gehäuseseitenwand (3), insbesondere in einem Schritt, miteinander verschweißt werden.

8. Verfahren nach Anspruch 1,
**dadurch gekennzeichnet, dass**
vor der Erzeugung der elektrisch leitfähigen Verbindung zwischen die Polkontakte (P) und die Gehäuseseitenwände (3) eine separate Folie aus einem Zusatzmaterial eingebracht wird.

9. Verfahren nach Anspruch 1,
**dadurch gekennzeichnet, dass**
vor der Erzeugung der elektrischen Verbindung auf die den Polkontakten (P) zugewandten Seiten der Gehäuseseitenwände (3) eine Folie aus einem Zusatzmaterial aufgebracht wird.

10. Verfahren nach Anspruch 1,
**dadurch gekennzeichnet, dass**
der in dem Zellengehäuse angeordnete Elektrodenstapel (2) aus einzelnen Elektroden, vorzugsweise Elektrodenfolien, gebildet wird, wobei die Elektroden durch einen Separator, vorzugsweise eine Separatorfolie, voneinander isolierend getrennt werden.

11. Verfahren nach Anspruch 10,
**dadurch gekennzeichnet, dass**
ein nach außerhalb des Elektrodenstapels (2) geführter Randbereich der jeweiligen Elektrodenfolie als Stromableiterfahne (2.1) verwendet wird.

12. Verfahren nach Anspruch 11,
**dadurch gekennzeichnet, dass**
als Elektrodenfolie (3) eine Kupfer- und/oder eine Aluminiumfolie oder eine Folie aus einer derartigen Legierung verwendet wird.

13. Verfahren nach Anspruch 1,
**dadurch gekennzeichnet, dass**
eine in Richtung der Stapelung der Elektrodenfolien gemessene lichte Höhe einer Materialrücknahme (4.1) kleiner oder gleich der entsprechenden Erstreckung der unbeeinflusst übereinander gestapelten zugehörigen Stromableiterfahnen (2.1) gewählt wird und deren parallel zur Flachseite einer Elektrodenfolie gemessene Tiefe größer oder gleich der entsprechenden Erstreckung der zugehörigen Stromableiterfahnen (2.1) gewählt wird.

14. Verfahren nach Anspruch 1,
**dadurch gekennzeichnet, dass**
nach der Erzeugung der elektrisch leitfähigen Verbindung die Gehäuseseitenwände (3) kraftschlüssig, stoffschlüssig und/oder formschlüssig an dem Rahmen (4) befestigt werden und die Einzelzelle (1) mit einem Elektrolyt befüllt wird.

## Claims

1. Method fir producing an individual cell (1) for a battery with an electrode stack (2) arranged within a cell housing, wherein the cell housing is represented by two electrically conductive housing side walls (3) and a frame (4) placed in between, which extends continuously along the edges and is electrically insulating, wherein current drain tabs (2.1) of one polarity are combined in each case to a pole contact (P) of the electrode stack (2), two material recesses (4.1) which are electrically insulated and spaced from each other and in which current drain tabs (2.1) of the same polarity are placed are produced in the frame (2), and an electrically conductive connection is established between the pole contacts (P) and the housing side walls (3),
**characterised in that**
the electrically conductive connection is established in an open state of the individual cell (1).

2. Method according to claim 1,
**characterised in that**
a pole contact (P) is connected to a housing side wall (3) in an electrically conductive manner before an arrangement of the electrode stack (2) in the frame (4).

3. Method according to claim 1,
**characterised in that**
following the arrangement of the electrode stack (2) in the frame (4), at least one pole contact (P) is connected to a housing side wall (3) in an electrically conductive manner.

4. Method according to claim 1,
**characterised in that**
the electrically conductive connection of the housing side walls (3) and the pole contacts (P) is produced in a welding process and/or in a combined welding/pressing joining process.

5. Method according to claim 4,
**characterised in that**
during the welding process one or more weld seams and/or welding spots are produced.

6. Method according to claim 4,
**characterised in that**
during the welding/pressing joining process one or more weld seams and/or welding spots are produced and the pole contacts (P) and the housing side walls (3) are pressed.

7. Method according to claim 5,
**characterised in that**
with one weld seam and/or one welding point, all current drain tabs (2.1) forming the pole contacts (P) and the corresponding electrically conductive housing side wall (3) are welded together, in particular in a single step.

8. Method according to claim 1,
**characterised in that**
a separate foil made of an auxiliary material is installed before the establishment of the electrically conductive connection between the pole contacts (P) and the housing side walls (3).

9. Method according to claim 1,
**characterised in that**
a foil made of an auxiliary material is installed on the sides of the housing side walls (3) which face the pole contacts (P) before the establishment of the electric connection.

10. Method according to claim 1,
**characterised in that**
the electrode stack (2) arranged in the cell housing is made up of individual electrodes, preferably electrode foils, the electrodes being separated and insulated from one another by a separator, preferably a separator foil.

11. Method according to claim 10,
**characterised in that**
an edge region of the respective electrode foil, which is extended outside the electrode stack, is used as a current drain tab (2.1).

12. Method according to claim 11,
**characterised in that**
a copper and/or aluminium foil or a foil made of an alloy of this type is used as electrode foil (3).

13. Method according to claim 1,
**characterised in that**
a clearance of a material recess (4.1) as measured in the stacking direction of the electrode foils is chosen to be less than or equal to the corresponding dimension of the associated current drain tabs (2.1) which have been stacked on top of one another in an uninfluenced manner, and **in that** its depth as measured parallel to the flat side of an electrode foil is greater than or equal to the corresponding dimension of the associated current drain tabs (2.1).

14. Method according to claim 1,
**characterised in that**
after the establishment of the electrically conductive connection, the housing side walls (3) are secured to the frame (4) in a non-positive, adhesive and/or positive manner, and **in that** the individual cell (1) is filled with an electrolyte.

## Revendications

1. Procédé de fabrication d'une cellule individuelle (1) pour une batterie comportant un empilement d'électrodes (2) disposé à l'intérieur d'un boîtier de cellules qui comporte deux parois latérales (3) électriquement conductrices et un cadre (4) périphérique, électriquement isolant et s'étendant entre les parois latérales, des cosses de dérivation de courant (2.1) d'une polarité étant regroupées en un contact polaire (P) de l'empilement d'électrodes (2), dans le cadre (4) étant disposées deux reprises de matériau (4.1) séparées et isolées électriquement l'une de l'autre, dans lesquelles sont disposées des cosses de dérivation de courant (2.1) de polarité identique et entre les contacts polaires (P) et les parois latérales (3) du boîtier est générée une liaison électriquement conductrice, **caractérisé en ce que** la liaison électriquement conductrice est générée dans un état ouvert de la cellule individuelle (1).

2. Procédé selon la revendication 1, **caractérisé en ce qu'**un contact polaire (P) est relié de manière électriquement conductrice à une paroi latérale (3) du boîtier avant que l'empilement d'électrodes (2) ne soit disposé dans le cadre (4).

3. Procédé selon la revendication 1, **caractérisé en ce qu'**au moins un contact polaire (P) est relié de manière électriquement conductrice à une paroi latérale (3) du boîtier après que l'empilement d'électrodes (2) est disposé dans le cadre (4).

4. Procédé selon la revendication 1, **caractérisé en ce que** la liaison électriquement conductrice entre les parois latérales (3) de boîtier et les contacts polaires est réalisée par un procédé de soudage et / ou par un procédé d'assemblage par soudage/compression combiné.

5. Procédé selon la revendication 4, **caractérisé en ce que** pendant le procédé de soudage un ou plusieurs cordons de soudure et / ou points de soudure sont réalisés.

6. Procédé selon la revendication 4, **caractérisé en ce que** pendant le procédé d'assemblage par soudage/compression un ou plusieurs cordons de soudure et / ou points de soudure sont réalisés et les contacts polaires (P) et les parois latérales (3) du boîtier sont comprimés.

7. Procédé selon la revendication 5, **caractérisé en ce que** par un cordon de soudure et / ou un point de soudure toutes les cosses de dérivation de courant (2.1) formant les contacts polaires (P) et la paroi latérale (3) du boîtier conductrice électriquement sont soudés ensemble, notamment au cours d'une étape.

8. Procédé selon la revendication 1, **caractérisé en ce qu'**avant la réalisation de la liaison électriquement conductrice une feuille séparée fabriquée en un matériau adjuvant est placée entre les contacts polaires (P) et les parois latérales (3) de boîtier.

9. Procédé selon la revendication 1, **caractérisé en ce qu'**avant la réalisation de la liaison électriquement conductrice une feuille séparée fabriquée en un matériau adjuvant est placée sur les côtés des parois latérales (3) du boîtier orientés vers les contacts polaires (P).

10. Procédé selon la revendication 1, **caractérisé en ce que** l'empilement d'électrodes (2) disposé dans le boîtier de cellules est constitué par des électrodes individuelles, de préférence des feuilles d'électrodes, les électrodes étant isolées les unes des autres par un séparateur, de préférence, une feuille de séparation.

11. Procédé selon la revendication 10, **caractérisé en ce qu'**une zone de bord amenée vers l'extérieur de l'empilement d'électrodes (2) de chaque feuille d'électrode est utilisée comme cosse de dérivation de courant (2.1).

12. Procédé selon la revendication 11, **caractérisé en ce qu'**une feuille d'aluminium et / ou de cuivre ou une feuille fabriquée à partir d'un tel alliage est conçue comme feuille d'électrode (3).

13. Procédé selon la revendication 1, **caractérisé en ce qu'**une hauteur de passage d'une reprise de matériau (4.1) calculée en direction de l'empilement des feuilles d'électrodes est inférieure ou égale à l'étendue correspondante des cosses de dérivation de courant (2.1) associées empilées les unes sur les autres de manière intacte et la profondeur parallèle au côté plat d'une feuille d'électrode est supérieure ou égale à l'étendue correspondante des cosses de dérivation de courant (2.1) associées.

14. Procédé selon la revendication 1, **caractérisé en ce qu'**après la réalisation de la liaison électriquement conductrice les parois latérales (3) du boîtier sont fixées par liaison de force, par liaison de matière et /ou par complémentarité de forme au cadre (4) et la cellule individuelle (1) est rempli d'un électrolyte.
